# EUROPÄISCHE PATENTANMELDUNG

(11) **EP 0 933 573 A2**
(43) Veröffentlichungstag der Anmeldung: **04.08.1999**
(21) Anmeldenummer: 99100995.2
(22) Anmeldetag: 21.01.1999
(51) Int. Cl.: F16K 31/60, F16K 35/02

(54) **Betätigungseinrichtung für ein Wasserventil**

(30) Priorität: 30.01.1998 DE 19803524
(71) Anmelder: FRIEDRICH GROHE AKTIENGESELLSCHAFT, D-58675 Hemer (DE)
(72) Erfinder: Pawelzik, Manfred, 59494 Soest (DE); Gebhardt, Wolfgang, 58706 Menden (DE); Smieja, Rainer, 59423 Unna (DE)

(57) **Zusammenfassung**

Bei einer Betätigungseinrichtung für ein Wasserventil (1), die an einem wenigstens um eine senkrecht zur Mittelachse (13) des Ventils angeordnete Achse (14) verschwenkbaren Stellhebel (11) ausgebildet ist, die zur Einstellung zumindest der Durchflußmenge dient und mit der das Wasserventil aus einer Absperrstellung wahlweise zu einem von zwei verschiedenen Verbrauchern umschaltbar ist, wobei ein Betätigungsglied (2) mit einem vom Benutzer lösbaren Anschlag (3) versehen ist, das ein Verschwenken aus der Absperrstellung zu einem nicht bevorrechtigten Verbraucher erst nach einer Lösebewegung des Anschlags (3) ermöglicht, ist zur Verbesserung vorgeschlagen, daß der lösbare Anschlag (3) mit einem Schaft (30) parallel zum Stellhebel (11) in dem Betätigungsglied in einer Führung verschiebbar gelagert ist, an dem ein radial vorstehender Anschlagkörper (31) ausgebildet ist, wobei der Anschlag von einer Feder (32) in eine Position gedrückt ist, in der der Anschlagkörper (31) in der Absperrstellung an einer inneren ringförmigen Mantelfläche (120) eines hohlkugelförmig eingezogenen ortsfesten Gehäuseteils (12) anliegt, während ein Lösen des Anschlags (3) durch ein Einschieben entgegen der Kraft der Feder (32) in den Gehäuseteil (12) erfolgt.

## Beschreibung

Die Erfindung betrifft eine Betätigungseinrichtung für ein Wasserventil, insbesondere für ein Misch- und Mengendosierventil, die an einem wenigstens um eine senkrecht zur Mittelachse des Ventils angeordnete Achse verschwenkbaren Stellhebel ausgebildet ist, die zur Einstellung zumindest der Durchflußmenge dient und mit der das Wasserventil aus einer Absperrstellung wahlweise zu einem von zwei verschiedenen Verbrauchern umschaltbar ist, wobei ein Betätigungsglied mit einem vom Benutzer lösbaren Anschlag versehen ist, das ein Verschwenken aus der Absperrstellung zu einem nicht bevorrechtigten Verbraucher erst nach einer Lösebewegung des Anschlags ermöglicht.

Eine derartige Betätigungseinrichtung ist aus der EP 0 309 443 A1 bekannt. Bei dieser Betätigungseinrichtung für ein Mischventil, mit der das Ventil aus der Absperrstellung wahlweise zu einem von zwei verschiedenen Verbrauchern umschaltbar ist, ist ein lösbarer Anschlag am Außenrand eines Nabenteils angeordnet, wobei der Anschlagkörper als Hebel ausgebildet ist und mit einer Stirnfläche eines zylindrischen Gehäuseteils zusammenwirkt. Hierbei ist der Anschlagkörper für den Benutzer sichtbar. Darüber hinaus wird beim Lösen des Anschlags der Anschlagkörper an der äußeren sichtbaren Mantelfläche des Gehäuseteils entlanggeführt, so daß es in diesem Bereich beispielsweise zu unerwünschten Verkratzungen an der sichtbaren Oberfläche kommen kann.

Der Erfindung liegt die Aufgabe zugrunde, eine verbesserte lösbare Anschlagausbildung für die im Oberbegriff des Anspruchs 1 angegebene Betätigungseinrichtung zu schaffen, bei der insbesondere die Anschlagausbildung verdeckt angeordnet ist und Verkratzungen etc. im sichtbaren Bereich des Gehäuses vermieden werden.

Diese Aufgabe wird erfindungsgemäß dadurch gelöst, daß der lösbare Anschlag mit einem Schaft parallel zum Stellhebel in dem Betätigungsglied in einer Führung verschiebbar gelagert ist, an dem ein radial vorstehender Anschlagkörper ausgebildet ist, wobei der Anschlag von einer Feder in eine Position gedrückt ist, in der der Anschlagkörper in der Absperrstellung an einer inneren ringförmigen Mantelfläche eines hohlkugelförmig eingezogenen ortsfesten Gehäuseteils anliegt, während ein Lösen des Anschlags durch ein Einschieben entgegen der Kraft der Feder in den Gehäuseteil erfolgt. Weitere Ausgestaltungen der Erfindung sind in den Ansprüchen 2 bis 10 angegeben.

Ausführungsbeispiele der Erfindung sind in der Zeichnung dargestellt und werden im folgenden näher beschrieben. Es zeigt
- Fig. 1: ein Einhebelwassermischventil in Seitenansicht, teilweise geschnitten;
- Fig. 2: das in Fig. 1 gezeigte Betätigungsglied in Unteransicht, teilweise geschnitten;
- Fig. 3: einen Teil des in Fig. 1 gezeigten Einhebelwassermischventils, wobei das Betätigungsglied in die volle Öffnungsposition des Ventils für einen bevorrechtigten Verbraucher verschwenkt ist;
- Fig. 4: das in Fig. 3 gezeigte Einhebelwassermischventil, wobei das Betätigungsglied in die volle Öffnungsposition des Ventils für einen nicht bevorrechtigten Verbraucher geschwenkt ist;
- Fig. 5: den in Fig. 1 gezeigten lösbaren Anschlag in Seitenansicht, teilweise geschnitten;
- Fig. 6: den in Fig. 5 gezeigten Anschlag in Draufsicht;
- Fig. 7: den in Fig. 5 gezeigten Anschlag um 90° gedreht in Vorderansicht;
- Fig. 8: den in Fig. 1 gezeigten Hebel in Seitenansicht;
- Fig. 9: den in Fig. 8 gezeigten Hebel in Draufsicht;
- Fig. 10: ein anderes Ausführungsbeispiel eines Einhebelwassermischventils in Seitenansicht, teilweise geschnitten, wobei das Betätigungsglied sich in der Absperrstellung des Ventils befindet;
- Fig. 11: das in Fig. 10 gezeigte Einhebelwassermischventil, wobei das Betätigungsglied in die volle Öffnungsposition des Ventils für einen nicht bevorzugten Verbraucher verschwenkt ist.

Der Einfachheit halber sind bei den Ausführungsbeispielen in der Zeichnung gleiche oder entsprechende Elemente mit jeweils gleichen Bezugszeichen versehen.

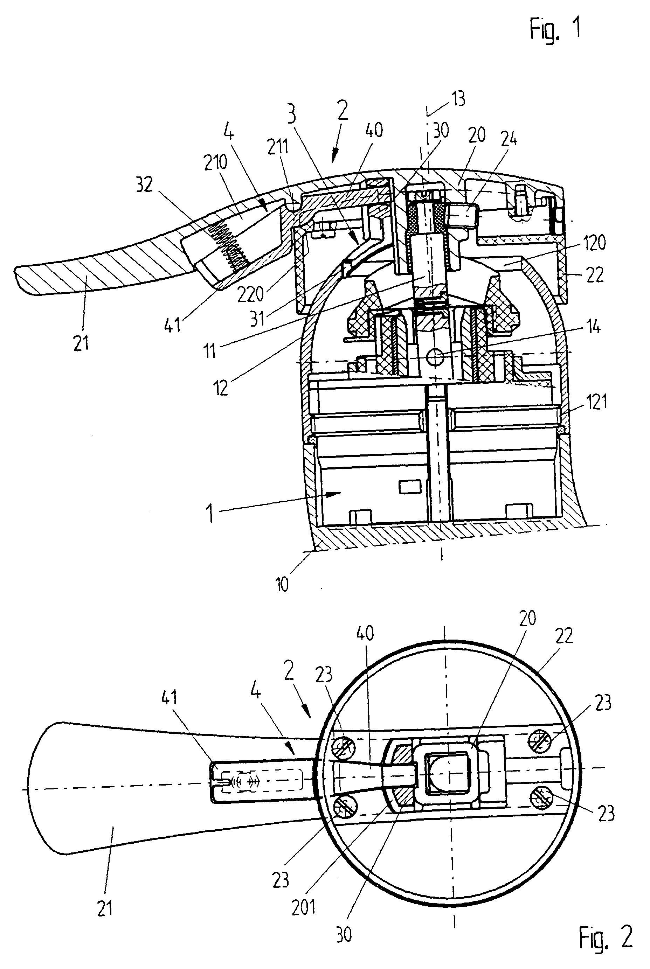

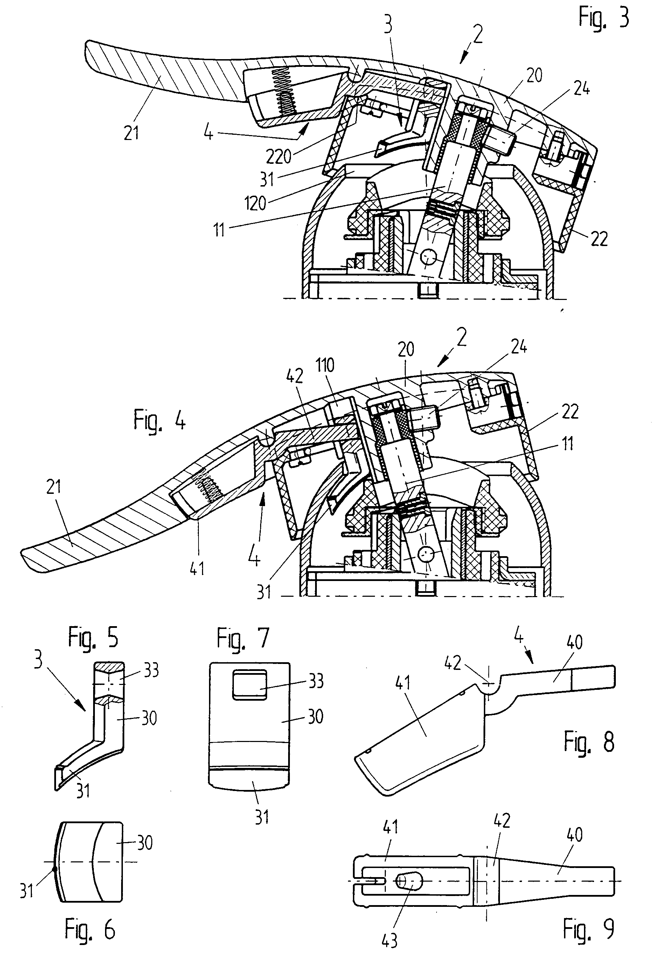

Das in Fig. 1 bis 9 der Zeichnung dargestellte Einhebelwassermischventil besteht im wesentlichen aus einem in einem zum Teil dargestellten Armaturenkörper 10 angeordneten Wasserventil 1, auf dem ein Betätigungsglied 2 angeordnet ist. In dem Wasserventil 1 sind zueinander bewegbare Ventilscheiben vorgesehen, die mit Zuflußleitungen für Kalt- und Warmwasser und zwei Abflußleitungen für Mischwasser (in der Zeichnung nicht dargestellt) versehen sind, wobei wenigstens eine Scheibe ortsfest gehalten und eine andere Scheibe bewegbar angeordnet ist. Die bewegbare Scheibe ist mit einem Stellhebel 11 verbunden. Mit einer Drehbewegung des Stellhebels 11 um eine Mittelachse 13 ist das Mischungsverhältnis des zufließenden Kalt- und Warmwassers einstellbar und durch eine Schwenkbewegung des Stellhebels 11 um eine senkrecht zur Mittelachse 13 angeordnete Achse 14 ist die Durchflußmenge pro Zeiteinheit bestimmbar, wobei alternativ das austretende Wasser einem von zwei Verbrauchern wahlweise zugeführt wird.
Hierbei befinden sich die Ventilscheiben in Absperrposition, wenn das Betätigungsglied 2 sich in einer Mittelstellung (Fig. 1) befindet. Wird aus dieser Position das Betätigungsglied 2 in die in Fig. 3 gezeigte Position verschwenkt, so wird von der Absperrposition beginnend, zunehmend der Wasserausfluß zu einem bevorrechtigten Verbraucher, beispielsweise eine Badewanne, freigegeben. Wird das Betätigungsglied 2 in entgegengesetzter Richtung verschwenkt, wie es in Fig. 4 dargestellt ist, so wird von der Absperrstellung beginnend, zunehmend der Wasserausfluß zu einem nicht bevorrechtigten Verbraucher, beispielsweise eine Brause, freigegeben. In allen Schwenkpositionen kann dabei das Betätigungsglied 2 um die Mittelachse 13 zur Einstellung des Mischungsverhältnisses von Kalt- und Warmwasser gedreht werden.

Um ein unbeabsichtigtes Freigeben des nicht bevorrechtigten Wasserauslasses zu verhindern, ist in dem Betätigungsglied 2 ein lösbarer Anschlag 3 angeordnet. Der Anschlag 3 ist hierbei mit einem Schaft 30 parallel zum Stellhebel 11 in einer Führung 201 in einem Nabenteil 20 des Betätigungsglieds 2 drehfest und axial begrenzt verschiebbar angeordnet. An dem Schaft 30 ist an einem Endbereich ein radial vorstehender Anschlagkörper 31 angeformt. An dem Nabenteil 20 ist ein radial vorstehender Handgriff 21 angeformt, an dessen Unterseite eine Ausnehmung 210 ausgebildet ist, in der ein mit dem Anschlag 3 verbundener Hebel 4 angeordnet ist. In der Ausnehmung 210 ist ein vorstehendes Lager 211 ausgebildet, auf dem der Hebel 4 mit einer zylindrischen Rinne 42 verschwenkbar gehalten ist. Der Hebel 4 weist einen inneren Hebelarm 40, der mit seinem Endbereich in eine Öffnung 33 des Anschlags 3 einfaßt, und einen äußeren Hebelarm 41 auf, der als Betätigungstaste ausgebildet ist. Im Bereich der Betätigungstaste ist eine Feder 32 angeordnet, mit der der Hebel 4 den Anschlagkörper 31 des Anschlags 3 in seine Anschlagposition drückt. Zur Führung der Feder 32 ist an der Innenseite des tastenförmig ausgebildeten Hebelarms 41 ein Dorn 43 angeformt.
An dem Nabenteil 20 ist außerdem mit Schrauben 23 eine ringförmige Schürze 22 befestigt. Die Außenseite der zylindrischen Rinne 42 des Hebels 4 wird hierbei von einer entsprechend geformten Aufnahme 220 gestützt, so daß der Hebel 4 um das als Vorsprung ausgebildete Lager 211 begrenzt verschwenkbar gehalten ist.

Das Wasserventil 1 ist in bekannter Weise einem Kartuschengehäuse gekapselt angeordnet und in einer Öffnung im Armaturenkörper 10 befestigt. Am Außenmantel der Ventilkartusche ist ein Gewinde 121 ausgebildet, auf dem ein haubenartiger Gehäuseteil 12 aufgeschraubt ist. Der von dem Gewinde 121 abgekehrte Endbereich ist hierbei hohlkugelförmig eingezogen ausgebildet und trägt am vorderen Endbereich eine innenliegende Mantelfläche 120. Die am Betätigungsglied 2 befestigte Schürze 22 stellt hierbei in den verschiedenen Schwenkpositionen des Betätigungsglieds 2 einen harmonischen Übergang zu der halbkugelförmigen Oberfläche des Endbereichs des Gehäuseteils 12 her. Die Mantelfläche 120 bildet dagegen den Festanschlag für den Anschlagkörper 31, so daß das Betätigungsglied 2 nur in dem Bereich des bevorrechtigten Verbrauchers bewegt werden kann. Soll dagegen umgeschaltet werden auf den nicht bevorrechtigten Verbraucher, beispielsweise eine Brause, so ist zunächst der äußere Hebelarm 41 von dem Benutzer entgegen der Kraft der Feder 32 in die Ausnehmung 210 des Handgriffs 21 zu drücken, wodurch der Anschlag 3 mit seinem Anschlagkörper 31 entsprechend abgesenkt wird, so daß nun bei einem Schwenkvorgang des Betätigungsglieds 2 um die Achse 14, wie es in Fig. 4 dargestellt ist, der Anschlagkörper 31 unter der Mantelfläche 120 an der Innenseite des hohlkugelförmig ausgebildeten Gehäuseteils 12 entlanggeführt wird. Der Anschlagkörper 31 ist hierbei ebenfalls hohlkugelsegmentartig ausgeführt. Sobald der Anschlagkörper an der inneren Kugeloberfläche des Gehäuseteils 12 anliegt, kann vom Benutzer die am Hebelarm 41 ausgebildete Taste losgelassen werden, da der Anschlagkörper 31 nunmehr von dem hohlkugelförmigen Bereich des Gehäuseteils 12 geführt wird. Wird hierbei vom Benutzer das Betätigungsglied 2 wieder in die Absperrstellung zurückgeschwenkt, so drückt die Feder 32 den Anschlag 3 mit dem Anschlagkörper 31 wieder in seine ursprüngliche Position zurück, so daß hiernach der nicht bevorrechtigte Verbraucher wieder gesperrt wird.

Erst durch eine erneute Betätigung des Hebels 4 wird der nicht bevorrechtigte Verbraucher wieder freigegeben.
Die Montage des Betätigungsglieds 2 kann in folgender Weise erfolgen:
Zunächst wird in dem Nabenteil 20 in die Führung 201 der Anschlag 3 mit dem Schaft 30 eingeführt. Anschließend wird der Hebel 4, auf dessen Dorn 43 die Feder 32 aufgeschoben ist, mit dem Hebelarm 40 in die Öffnung 33 eingesteckt und radial auf das als Vorsprung ausgebildete Lager 211 aufgedrückt. Hiernach kann die Schürze 22 mit den Schrauben 23 an dem Nabenteil 20 befestigt werden. Sodann kann das Betätigungsglied 2 auf das Wasserventil 1 aufmontiert werden.
Das als Mischventilkartusche ausgebildete Wasserventil 1 wird in bekannter Weise in einer Aufnahme des Armaturenkörpers 10 befestigt. Danach kann das Gehäuseteil 12 auf das Gewinde 121 aufgeschraubt werden. Anschließend kann das Betätigungsglied 2 mit dem Nabenteil 20 auf den Stellhebel 11 drehfest aufgesteckt werden, wonach in bekannter Weise die Axialsicherung durch eine Radialschraube 24 hergestellt wird, und das Wasserventil 1 ist betriebsbereit.

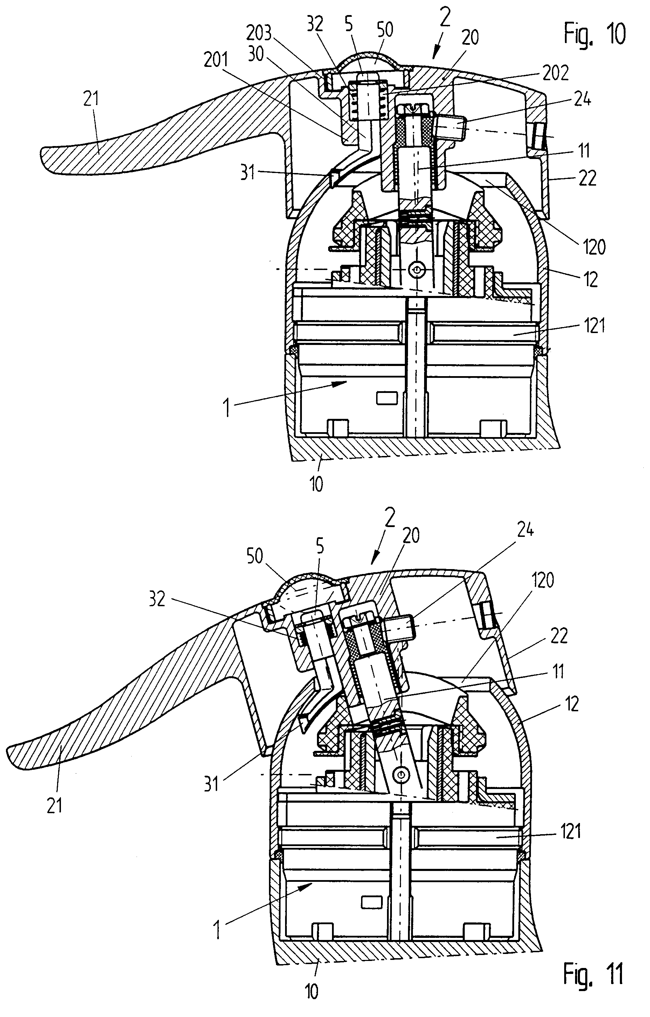

In Fig. 10 und 11 ist ein anderes Ausführungsbeispiel dargestellt. Das Wasserventil 1 mit dem Gehäuseteil 12 entspricht hierbei dem vorstehend beschriebenen Ausführungsbeispiel. Das Betätigungsglied 2 ist dagegen einstückig mit einem Nabenteil 20, einem Handgriff 21 und einer Schürze 22 hergestellt.

Der lösbare Anschlag ist hierbei ebenfalls mit dem Schaft 30 von einer Führung 201 drehfest und axial beweglich gehalten, wobei jedoch der Schaft 30 durch das Nabenteil 20 hindurchgeführt ist und am vorstehenden Endbereich einen Betätigungskopf 5 trägt. Oberhalb der Führung 201 ist in dem Nabenteil 20 eine Aussenkung 202 vorgesehen, in der die Feder 32 angeordnet ist, die sich einerseits im Grund der Aussenkung 202 und andererseits am Betätigungskopf 5 abstützt. Der Betätigungskopf 5 ist zur dichten und pflegeleichten Anordnung mit einer in einer Ausnehmung 203 angeordneten elastisch auslenkbaren Membran 50 gekapselt.
Wenn vom Benutzer der nicht bevorrechtigte Verbraucher eingeschaltet werden soll, ist zunächst die Membran 50 von Hand entgegen der Kraft der Feder 32 einzudrücken, so daß der Anschlagkörper 31 axial zur Mantelfläche 120 entsprechend verschoben und der Schwenkweg in diesem Bereich freigegeben wird, wie es aus Fig. 11 ersichtlich ist. Im übrigen entspricht die Funktionsweise dieser lösbaren Anschlagausbildung der in Fig. 1 bis 9 beschriebenen Ausbildung.

Bei den vorstehend beschriebenen Ausführungsbeispielen ist das Wasserventil 1 als Misch- und Mengendosierventil ausgebildet. Selbstverständlich kann das Wasserventil auch lediglich als Mengendosierventil ausgebildet sein, mit dem eine Umstellung zu verschiedenen Verbrauchern ermöglicht ist.

## Patentansprüche

1. Betätigungseinrichtung für ein Wasserventil (1), insbesondere für ein Misch- und Mengendosierventil, die an einem wenigstens um eine senkrecht zur Mittelachse (13) des Ventils angeordnete Achse (14) verschwenkbaren Stellhebel (11) ausgebildet ist, die zur Einstellung zumindest der Durchflußmenge dient und mit der das Wasserventil (1) aus einer Absperrstellung wahlweise zu einem von zwei verschiedenen Verbrauchern umschaltbar ist, wobei ein Betätigungsglied (2) mit einem vom Benutzer lösbaren Anschlag (3) versehen ist, das ein Verschwenken aus der Absperrstellung zu einem nicht bevorrechtigten Verbraucher erst nach einer Lösebewegung des Anschlags (3) ermöglicht, dadurch gekennzeichnet, daß der lösbare Anschlag (3) mit einem Schaft (30) parallel zum Stellhebel (11) in dem Betätigungsglied (2) in einer Führung (201) verschiebbar gelagert ist, an dem ein radial vorstehender Anschlagkörper (31) ausgebildet ist, wobei der Anschlag (3) von einer Feder (32) in eine Position gedrückt ist, in der der Anschlagkörper (31) in der Absperrstellung an einer inneren ringförmigen Mantelfläche (120) eines hohlkugelförmig eingezogenen ortsfesten Gehäuseteils (12) anliegt, während ein Lösen des Anschlags (3) durch ein Einschieben entgegen der Kraft der Feder (32) in den Gehäuseteil (12) erfolgt.

2. Betätigungseinrichtung nach Anspruch 1, dadurch gekennzeichnet, daß der Anschlagkörper (31) entsprechend dem Gehäuseteil (12) hohlkugelsegmentartig ausgebildet ist.

3. Betätigungseinrichtung nach Anspruch 1 oder 2, dadurch gekennzeichnet, daß der Gehäuseteil (12) mittels Gewinde (121) an dem Wasserventil (1) befestigt ist.

4. Betätigungseinrichtung nach einem der Ansprüche 1 bis 3, dadurch gekennzeichnet, daß im Bereich des Handgriffs (21) ein Hebel (4) angeordnet ist, der mit einem inneren Hebelarm (40) mit dem Schaft (30) verbunden ist, während ein äußerer Hebelarm (41) des Hebels (4) zur Lösung des Anschlags (3) dient.

5. Betätigungseinrichtung nach Anspruch 4, dadurch gekennzeichnet, daß an der Unterseite des Handgriffs (21) eine Ausnehmung (210) ausgebildet ist, in der ein Lager (211) zur schwenkbaren Halterung des Hebels (4) vorgesehen ist, während der äußere Hebelarm (41) als Taste ausgebildet ist, wobei im inneren der Taste die Feder (32) angeordnet ist, die sich einerseits am Grund der Ausnehmung (210) und andererseits an der Innenseite der Taste abstützt, und die Federführung von einem an der Innenseite der Taste ausgebildeten Dorn (43) erfolgt.

6. Betätigungseinrichtung nach Anspruch 5, dadurch gekennzeichnet, daß der Handgriff (21) an einem Nabenteil (20) ausgebildet ist, wobei der Hebel (4) mit einer zylindrischen Rinne (42) auf einem entsprechend als Vorsprung ausgebildeten Lager (211) gehalten ist und die Außenseite der zylindrischen Rinne (42) in einer entsprechenden zylindrischen Aufnahme (220) einer an dem Nabenteil (20) befestigten Schürze (22) geführt ist, die andererseits zu der halbkugelförmigen Oberfläche des Gehäuseteils (12) einen harmonischen Übergang bildet und den Anschlag (3) verdeckt.

7. Betätigungseinrichtung nach einem der Ansprüche 1 bis 3, dadurch gekennzeichnet, daß der Schaft (30) durch das Betätigungsglied (2) hindurchgeführt ist und an der Außenseite einen Betätigungskopf (5) trägt, wobei an der dem Anschlagkörper (31) gegenüberliegenden Seite in einer Aussenkung (202) die Feder (32) angeordnet ist, die sich einerseits im Grund der Aussenkung (202) und andererseits am Betätigungskopf (5) abstützt.

8. Betätigungseinrichtung nach Anspruch 7, dadurch gekennzeichnet, daß am Nabenteil (20) ein Handgriff (21) sowie eine zylindrische Schürze (22) ausgebildet ist, wobei die Schürze (22) den Anschlag (3) verdeckt und einen harmonischen Übergang zu der halbkugelförmigen Oberfläche des Gehäuseteils (12) bildet, während der Betätigungskopf (5) von einer in einer Ausnehmung (203) eingelassenen elastisch auslenkbaren Membran (50) gekapselt ist.

9. Betätigungseinrichtung nach Anspruch 6, dadurch gekennzeichnet, daß die Schürze (22) mit Schrauben (23) am Nabenteil (20) befestigt ist.

10. Betätigungseinrichtung nach wenigstens einem der Ansprüche 1 bis 9, dadurch gekennzeichnet, daß der Schaft (30) in der Führung (201) drehfest gehalten und einstückig mit dem Anschlagkörper (31) ausgebildet ist.
